# EUROPEAN PATENT SPECIFICATION

(11) **EP 1 711 895 B1**
(45) Date of publication and mention of the grant of the patent: **28.11.2007**
(21) Application number: 05702791.4
(22) Date of filing: 26.01.2005
(51) Int. Cl.: G06F 11/14

(54) **AUDIO/VIDEO CONTENT SYNCHRONIZATION THROUGH PLAYLISTS**
AUDIO-/VIDEO-INHALTSSYNCHRONISATION DURCH PLAYLISTS
SYNCHRONISATION DE CONTENU AUDIO/VIDEO AU MOYEN DE LISTES DE DIFFUSION

(30) Priority: 27.01.2004 US 539791 P
(43) Date of publication of application: 18.10.2006
(73) Proprietor: Koninklijke Philips Electronics N.V., 5621 BA Eindhoven (NL)
(72) Inventor: GUILLORIT, Fabien, M.J., NL-5621 BA Eindhoven (NL)
(74) Representative: Groenendaal, Antonius W. M.
(86) International application number: PCT/IB2005/050304
(87) International publication number: WO 2005/073856

(56) References cited:
- US-A- 5 666 530
- US-A1- 2002 174 269
- "User's Manual" INTERNET, [Online] July 2003 (2003-07), XP002335594 Retrieved from the Internet: URL:http://www.miogps.com/manual/339.PDF> [retrieved on 2005-07-11]

## Description

The invention relates to a method for performing bi-directional synchronization between content of a first device and content of a second device through lists identifying said content, said method comprising the acts of:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked
for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization.

The invention further relates to an apparatus for performing bi-directional synchronization between content of a first device and content of a second device through lists identifying said content, said apparatus comprising said second device for:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization.

The invention further relates to a machine-readable medium whose contents cause a computer system to perform a method for performing bi-directional synchronization between content of a first device and content of a second device through lists identifying said content, said method comprising the acts of:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization.

This invention relates to synchronization, and more particularly to a system and
method for maintaining synchronization between a multimedia device and a content source such as a personal computer or set top box.

Media devices, such as digital music players, typically access their content from sources of content that typically have larger storage capacity. These content sources may
include personal computers, media servers, set-top-box and content host. Generally, a user connects a player to the content source. The content source typically has a software application allowing the user to select the content to be loaded onto the player. In the example of a music player, the content would be digital music files, such as MP3 (Moving Picture Experts Group, layer 3) files.

In order to allow the user to select content, this application knows all of the content available. As the user selects content, the application moves the content to the media player. This application may also provide the user the ability to manage the content on the media player, as the media player is connected to the content source running the application.

Management of the content, both on the content source and the media player,
generally involves tools to organize and classify the music files. Organization may take the form of sorting or grouping of the content files. One example of grouping the files is a play list. A play list may identify files that have a similar attribute, such as songs from a particular album, the artist, genre, or songs selected by the user. Creation of a play list generally involves the user selecting each content file individually and then identifying that file as being part of the play list. The play list is then saved with some sort of identifying name, allowing the user to play those files by selecting that play list.

One useful function of a play list is the ability to synchronize a home computer
with the media player. For example, the music collection on the media player may be updated from a home computer, school computer, or other content source, by simply connecting the media player to the content source. Upon connecting the two devices, the media player will recognize the content source as the primary computer. A user then identifies which play lists from the content source he or she wishes to synchronize with the media player. Subsequent to selecting one or more play lists, an application program resident in the content source will automatically update (sync) the player with the content source using the one or more user identified play lists. That is, the identified play lists and songs included therein are copied from the content source to the player. In this manner, the songs and play lists from a content source, as identified by a user, are kept in sync with the songs and play lists on a player.

One drawback of the 'synchronization' method described above is that it is a
unidirectional operation that updates the play list(s) of the media player using the play list(s) of the content source. In the case where the media device is capable of independently recording audio/video content from multiple sources, there is no provision for updating the host device from the media player.

In view of the foregoing considerations, there is a need for a synchronization
method that flexibly allows for bi-directional synchronization between a content source (e.g., home computer, set-top box, etc.) and a multimedia player device using play lists.

US 5,666,530 discloses a system for automatic synchronization of common file between portable computer and host computer via communication channel selected from a plurality of usable channels there between.

US 2002/0174269 discloses a proximity synchronizing audio gateway device for use in a wireless network.

The present invention provides techniques related to bi-directional synchronization of media content stored on a multimedia player device with media content stored on a content source (e.g., personal computer, set-top box, home media center) through play lists.

The method according to the invention is characterized in that said content is media content, said first device is a media player, said second device is a host device, and said list is a play list, wherein said method further comprises the acts of:
determining if the media player has deleted at least one pre-existing play list; and
updating a memory store of the host device by storing the media contents of the at least one deleted play list in an archive data directory of the host device.

The apparatus according to the invention is characterized in that said content is media content, said first device is a media player, said second device is a host device, and said list is a play list, wherein said host device is arranged for:
determining if the media player has deleted at least one pre-existing play list; and
updating a memory store of the host device by storing the media contents of the at least one deleted play list in an archive data directory of the host device.

The machine-readable medium according to the invention is characterized in that said content is media content, said first device is a media player, said second device is a host device, and said list is a play list, wherein said method further comprises the acts of:
determining if the media player has deleted at least one pre-existing play list; and
updating a memory store of the host device by storing the media contents of the at least one deleted play list in an archive data directory of the host device.

FIG. 1 is a block diagram of a synchronization system according to one embodiment of the invention; and
FIG. 2 is a flow diagram of synchronization processing according to one embodiment of the invention.

The invention relates to bi-directional synchronization of multimedia content between a content source (e.g., personal computer, set-top box, home media center) and a portable media player device through play lists.

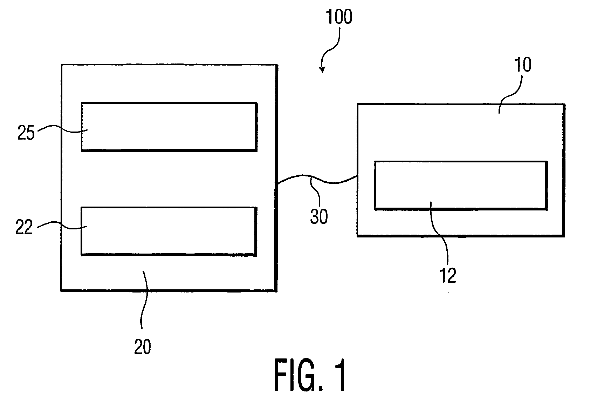

FIG. 1 is a block diagram of a synchronization system according to one embodiment of the invention. The synchronization system 100 includes a media player device 10 including an associated data storage device 12 (e.g., disk drive) for storing data related to user generated play lists and a personal computer 20 including an associated data storage device 22 for storing, inter alia, data related to user generated play lists.

The portable media player device 10 is typically a portable computing device dedicated to processing multi-media content such as music, audio, and images (video). For example, the media player device can be a music player (e.g., MP3 player, Ipod from Apple^{™} corporation), a game player, a video player, a video recorder, a camera, an image viewer and the like. These devices are generally battery operated and highly portable so as to allow a user to listen to music, play games or video, record video or take pictures wherever the user travels.

The personal computer 20, as is well known, is characterized as being generally non-mobile, having a large storage capacity, considerable processing power, and means for retrieving multimedia content from networked (e.g., internet, cable, etc.) and non-networked sources (e.g., DVD, CD and HDD).

Typically, the media player 10 and personal computer 20 include conventional components such as a cache memory for storing media content in-use, a screen display for displaying information to a user, and a processor (e.g., microprocessor) for controlling operation of the devices. Both the personal computer 20 and media player device 10 also include applications that allow a user to compose/edit play lists. Internally, the play lists of the respective devices 10, 20 are embodied as data structures. The data structures point to media content (e.g., multimedia files) of the play lists residing on a memory store (e.g., disk drive, hard drive) within the respective devices 10, 12. The personal computer 20 also includes a synchronization manager 25.

A peripheral cable 30 provides a data path (or data link) between the media player 10 and the personal computer 20. The peripheral cable 30 provides a peripheral bus that couples the media player 10 to the personal computer 20. The peripheral bus, for example, could be a FIREWIRE bus or a Universal Serial Bus (USB).

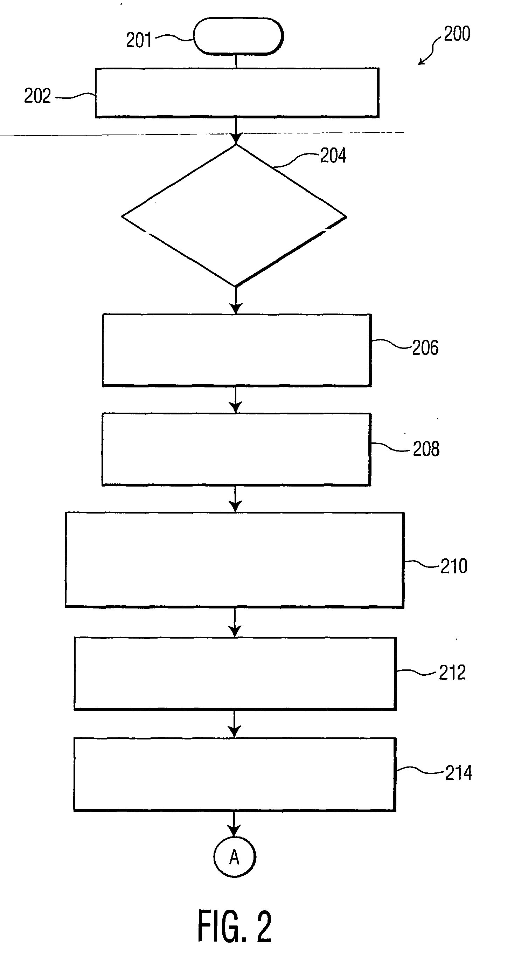

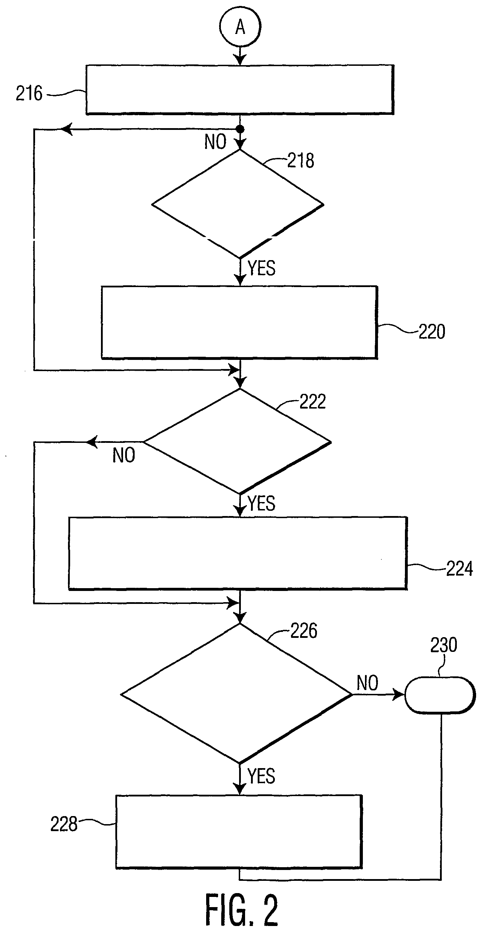

FIG. 2 is flow diagram of synchronization processing 200 according to one embodiment of the invention. The synchronization processing 200 is, for example, performed by the personal computer 20 illustrated in FIG. 1. More specifically, the synchronization processing 200 is performed under the control of the synchronization manager 25 illustrated in FIG. 1.

At act 202: The media player device 10 is connected to the personal computer 20 via peripheral cable 30 whereby the synchronization manager 25 of the personal computer 20 automatically detects the connection of the media player 10 to the personal computer 20. Such media player devices 10 are typically provided with a capability to plug into a USB port or an IEEE 1394 port, via peripheral cable 30, which is also referred to as a FireWire port or an i-Link port, or another port of the computer that is hot. A hot port is one into which a cable for a device can be plugged while the computer is on, desirably for immediate detection by the operating system. For some operating systems, the parallel port, which is also referred to as the IEEE 1284 port, is also a hot port.

At act 204: The synchronization manager 25 determines if the connected media player device 20 is the device usually used for synchronization. One way of making this determination is by using the device's globally unique silicon identifier (GUID). The GUID uniquely identifies a 1394 enabled device connected to a 1394 bus. If a GUID is not available, the process can use another accessible ID that is unique to the media player device 10.

At act 206: The synchronization manager 25 queries the media player device 10 for a copy of its play lists which have been marked for synchronization by a user of the media player device 10;

At act 208: The media player device 10, in response to the query, transfers the play lists which have been marked by a user of the media player device 10 for synchronization to the personal computer 20. The user of the media player device 10 has the option of deciding which play lists are to be included in the synchronization procedure 200 by marking the play lists for inclusion on the media player device 10. Marking a play list for synchronization in the synchronization procedure 200 can occur on the media player device 10 through a standard screen display comprising a play list title portion to permit the user to readily identify the selected play list. The identified play list(s) can be marked by pressing a "select for synch" icon or, alternatively, simply by touching a touch-sensitive display.

At act 210: The synchronization manager 25 compares time and date information for the play lists copied from the media player device 10 with time and date information for corresponding play lists on the personal computer 20. A corresponding play list on the personal computer 20 may be identified as having the same play list title as a copied play list from the media player device 10. Such comparison produces comparison information concerning differences between the time and date information for play lists associated with the media player device 10 and time and date information for play lists associated with the personal computer 20.

At act 212: The synchronization manager 25 determines one or more play lists to copy between the personal computer 20 and the media player device 10 based on the comparison information.

At act 214: Based on the comparison information, for those play lists of the personal computer 20 having more current time and date information than the corresponding play lists of the media player device 10 with which they are compared, the compared media player device 10 play lists are updated and transferred back to the media player device 10. At the media player device 10, the memory storage device 12 is updated to reflect the updated media play lists..

At act 216: Based on the comparison information, for those play lists of the media player device 10 having more current time and date information than the play lists of the personal computer 20 with which they are compared, the personal computer 10 play lists are updated and the associated memory storage device 22 is updated accordingly.

At act 218: The synchronization manager 25 determines whether the media player device 10 has created any new play lists. If no new play lists, the process continues at act 222.

At act 220: If it is determined at act 218 that one or more new play lists have been created by a user of the media player 10, then the personal computer 20 commands the media player 10 to transfer the one or more new play lists to the personal computer 20 to be stored in a memory 22 (e.g., disk drive, hard drive) of the personal computer 20.

At act 222: The synchronization manager 25 determines whether the media player device 10 has deleted any existing play lists.

At act 224: If it is determined at act 222 that one or more play lists have been deleted at the media player 10, then the memory store (e.g., disk drive, hard drive) of the personal computer 20 is updated to store the media contents of the deleted play lists in an archive directory. The user of the personal computer 20 has the option of retaining the contents of the archive directory until the user decides to permanently purge the unreferenced content stored therein. It is noted that the deleted play lists are permanently deleted from the memory 12 of the media player 10.

At act 226: The synchronization manager 25 determines whether the personal computer 20 has created any new play lists. If not, the process terminates at act 230.

At act 228: If it is determined at act 226 that one or more new play lists have been created at the personal computer 20, then the one or more new play lists are copied to the media player 10. The process then terminates at act 230

The operation of the system 200 to synchronize media content has been previously described. The system advantageously allows the updating of media content using time and date information of play lists in each device to be synchronized. The data structures of the respective devices are automatically updated in accordance with the synchronization procedure. Thus, the system 100 provides a powerful but simple technique that allows a user to quickly update media content in both a host (e.g., personal) computer or similarly configured device and a portable media player device by simply identifying those play lists for which the user decides to include for synchronization. The system further provides a means for archiving media content associated with play lists deleted by the portable media player. The system further provides a means for updating the data structure of the personal computer for any new lists created by a user of the media player device.

Although this invention has been described with reference to particular embodiments, it will be appreciated that many variations will be resorted to without departing from the scope of this invention as set forth in the appended claims. The specification and drawings are accordingly to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function; and
e) each of the disclosed elements may be comprised of hardware portions (e.g., discrete electronic circuitry), software portions (e.g., computer programming), or any combination thereof.

## Claims

1. A method for performing bi-directional synchronization between content of a first device and content of a second device through lists identifying said content, said method comprising the acts of:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked
for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization,
**characterized in that** said content is media content, said first device is a media player (10), said second device is a host device (20), and said list is a play list, wherein said method further comprises the acts of:
determining if the media player (10) has deleted at least one pre-existing play list; and
updating a memory store of the host device (20) by storing the media contents of the at least one deleted play list in an archive data directory of the host device (20).

2. The method of Claim 1, further comprising creating and storing play lists identifying multi-media content in each of said host device (20) and media player (10).

3. The method of Claim 1, wherein the host device (20) is a personal computer (20), and wherein the acts of Claim 1 are carried out using a dedicated application program stored on the personal computer (20).

4. The method of Claim 1, further comprising the act of storing the play lists copied from the media player (10) to the host device (20) in a memory store (22) of the host device and storing the play lists copied from the host device (20) to the media player (10) in a memory store (12) of the media player (10).

5. The method of Claim 1, wherein said act of detecting connection of the media player (10) to the host device (20) further comprises determining if the media player (10) is connected to the host device (20) for purpose of synchronization.

6. The method of Claim 1, wherein said method further comprises the acts of:
determining if the media player (10) has created at least one new play list;
copying the at least one new play list from the media player (10) to the host device (20) when said determination act is satisfied; and
storing the at least one new play list in a data directory of the host device (20).

7. The method of Claim 1, wherein the media player (10) comprises an audio player, and wherein the audio player play lists identify media content comprising at least audio files of songs; or wherein the media player (10) comprises a video player, and wherein the video player play lists identify media content comprising at least video files of videos; or wherein the media player (10) comprises an image viewer, and wherein the image viewer play lists identify media content comprising at least image files of images.

8. An apparatus for performing bi-directional synchronization between content of a first device and content of a second device through lists identifying said content, said apparatus comprising said second device for:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization, **characterized in that** said content is media content, said first device is a media player (10), said second device is a host device (20), and said list is a play list, wherein said host device (20) is arranged for:
determining if the media player (10) has deleted at least one pre-existing play list; and
updating a memory store of to the host device (20) by storing the media contents of the at least one deleted play list in an archive data directory of the host device (20).

9. The apparatus of Claim 8, wherein the host device (20) is a personal computer (20).

10. The apparatus of Claim 8, wherein the host device (20) comprises a host device interface being an IEEE 1394 port or a USB port.

11. A machine-readable medium whose contents cause a computer system to perform a method for performing bi-directional synchronization between content of a first device and content of a second device through lists identifying said content, said method comprising the acts of:
detecting connection of the first device to the second device;
requesting, from the second device, at least one list from the first device marked for synchronization;
responsive to the query, transferring from the first device to the second device said at least one list marked for synchronization;
comparing time and date information of said at least one list marked for synchronization with time and date information of corresponding lists of said second device, said comparing producing comparison information;
determining which lists are to be copied from the first device to the second device and which lists are to be copied from the second device to the first device based on the comparison information; and
copying the determined lists to perform the bi-directional synchronization, **characterized in that** said content is media content, said first device is a media player (10), said second device is a host device (20), and said list is a play list, wherein said method further comprises the acts of:
determining if the media player (10) has deleted at least one pre-existing play list; and
updating a memory store of the host device (20) by storing the media contents of the at least one deleted play list in an archive data directory of the host device (20).

12. The machine readable medium of Claim 11, wherein said act of detecting
connection of the media player (10) to the host device (20) further comprises determining if the media player (10) is connected to the host device (20) for purpose of synchronization.

13. The machine readable medium of Claim 11, wherein said method further comprises the acts of:
determining if the media player (10) has created at least one new play list;
copying the at least one new play list from the media player (10) to the host device (20) when said determination act is satisfied; and
storing the at least one new play list in a data directory of the host device (20).

14. The machine readable medium of Claim 11, further comprising creating and storing play lists identifying multi-media content in each of said host device (20) and media player (10).

## Patentansprüche

1. Verfahren zum Durchführen bidirektionaler Synchronisation zwischen Inhalt einer ersten Anordnung und Inhalt einer zweiten Anordnung durch Playlists, die diesen Inhalt identifizieren, wobei das genannte Verfahren die nachfolgenden Verfahrensschritte umfasst:
- das Detektieren einer Verbindung der ersten Anordnung mit der zweiten Anordnung,
- das Beantragen, durch die zweite Anordnung, wenigstens einer Liste, die von der ersten Anordnung zur Synchronisation markiert ist,
- in Reaktion auf den Antrag, das Übertragen der genannten wenigstens einen zur Synchronisation markierten Liste von der ersten Anordnung,
- das Vergleichen von Zeit- und Tagesinformation der genannten einen zur Synchronisation markierten Liste mit der Zeit- und Tagesinformation entsprechender Listen der genannten zweiten Anordnung, wobei dieser Vergleich Vergleichsinformation erzeugt;
- das Ermitteln, welche Listen von der ersten Anordnung in die zweite Anordnung kopiert werden sollen und welche Listen von der zweiten Anordnung in die erste Anordnung kopiert werden sollen, und zwar auf Basis der Vergleichsinformation; und
- das Kopieren der ermittelten Listen zum Vorformen der bidirektionalen Synchronisation, **dadurch gekennzeichnet, dass** der genannte Inhalt Mediainhalt ist, wobei die genannte erste Anordnung ein Mediaspieler (10) ist, wobei die genannte zweite Anordnung eine Gastgeberanordnung (20) ist und wobei die genannte Liste eine Playlist ist, wobei das genannte Verfahren weiterhin die nachfolgenden Verfahrensschritte umfasst:
- das Ermitteln, ob der Mediaspieler (10) wenigstens eine vorher bestehende Playlist gelöscht hat; und
- das Aktualisieren eines Speichers der Gastgeberanordnung (20) durch Speicherung des Mediainhalts der wenigstens einen gelöschten Playlist in einem Archivdatenverzeichnis der Gastgeberanordnung (20).

2. Verfahren nach Anspruch 1, das weiterhin das Erzeugen und Speichern von Playlists umfasst, die Multimediainhalt in der genannten Gastgeberanordnung (20) und in dem Mediaspieler (10) umfasst.

3. Verfahren nach Anspruch 1, wobei die Gastgeberanordnung (20) ein PC (20) ist und wobei die Verfahrensschritte des Anspruchs 1 unter Anwendung eines speziellen Applikationsprogramms durchgeführt werden, das in dem PC (20) gespeichert ist.

4. Verfahren nach Anspruch 1, das weiterhin den Verfahrensschritt der Speicherung der Playlists umfasst, die aus dem Mediaspieler (10) in die Gastgeberanordnung (20) in einem Speicher (22) der Gastgeberanordnung kopiert worden sind und der Speicherung der Playlists, die aus der Gastgeberanordnung (20) zu dem Mediaspieler (10) in dem Speicher (12) des Mediaspielers (10) kopiert worden sind.

5. Verfahren nach Anspruch 1, wobei der genannte Verfahrensschritt der Detektion der Verbindung des Mediaspielers (10) mit der Gastgeberanordnung (20) weiterhin die Ermittlung umfasst, ob der Mediaspieler (10) zur Synchronisation mit der Gastgeberanordnung (20) verbunden ist.

6. Verfahren nach Anspruch 1, wobei das genannte Verfahren weiterhin die nachfolgenden Verfahrensschritte umfasst:
- das Ermitteln, ob der Mediaspieler (10) wenigstens eine neue Playlist erzeugt hat;
- das Kopieren der wenigstens einen neuen Playlist aus dem Mediaspieler (10) in die Gastgeberanordnung (20), wenn der genannte Ermittlungsschritt befriedigt worden ist; und
- das Speichern der wenigstens einen neuen Playlist in einem Datenverzeichnis der Gastgeberanordnung (20).

7. Verfahren nach Anspruch 1, wobei der Mediaspieler (10) einen Audiospieler aufweist und wobei der Audiospieler Listen abspielt, die Mediainhalt mit wenigstens Audiodateien von Songs identifizieren; oder wobei der Mediaspieler (10) einen Videospieler aufweist, und wobei der Videospieler Listen abspielt, die Mediainhalt mit wenigstens Videodateien oder Videos identifizieren; oder wobei der Mediaspieler (10) einen Bildbetrachter aufweist, und wobei der Bildbetrachter Listen abspielt, die Mediainhalt mit wenigstens Bilddateien oder Bildern identifizieren.

8. Gerät zum Durchführen einer bidirektionalen Synchronisation zwischen Inhalt einer ersten Anordnung und Inhalt einer zweiten Anordnung durch Listen, die diesen Inhalt identifizieren, wobei das genannte Gerät die genannte zweite Anordnung aufweist, und zwar zum:
- Detektieren einer Verbindung der ersten Anordnung mit der zweiten Anordnung,
- das Beantragen, durch die zweite Anordnung, wenigstens einer Liste, die von der ersten Anordnung zur Synchronisation markiert ist,
- in Reaktion auf den Antrag, das Übertragen der genannten wenigstens einen zur Synchronisation markierten Liste von der ersten Anordnung,
- das Vergleichen von Zeit- und Tagesinformation der genannten einen zur Synchronisation markierten Liste mit der Zeit- und Tagesinformation entsprechender Listen der genannten zweiten Anordnung, wobei dieser Vergleich Vergleichsinformation erzeugt;
- das Ermitteln, welche Listen von der ersten Anordnung in die zweite Anordnung kopiert werden sollen und welche Listen von der zweiten Anordnung in die erste Anordnung kopiert werden sollen, und zwar auf Basis der Vergleichsinformation; und
- das Kopieren der ermittelten Listen zum Vorformen der bidirektionalen Synchronisation, **dadurch gekennzeichnet, dass** der genannte Inhalt Mediainhalt ist, wobei die genannte erste Anordnung ein Mediaspieler (10) ist, wobei die genannte zweite Anordnung eine Gastgeberanordnung (20) ist und wobei die genannte Liste eine Playlist ist, wobei das genannte Verfahren weiterhin die nachfolgenden Verfahrensschritte umfasst:
- das Ermitteln, ob der Mediaspieler (10) wenigstens eine vorher bestehende Playlist gelöscht hat; und
- das Aktualisieren eines Speichers der Gastgeberanordnung (20) durch Speicherung des Mediainhalts der wenigstens einen gelöschten Playlist in einem Archivdatenverzeichnis der Gastgeberanordnung (20).

9. Gerät nach Anspruch 8, wobei die Gastgeberanordnung (20) ein PC (20) ist.

10. Gerät nach Anspruch 8, wobei die Gastgeberanordnung (20) eine Gastgeberanordnungsschnittstelle aufweist, die ein IEEE 1394 Port oder ein USB Port ist.

11. Von einer Maschine auslesbares Medium, dessen Inhalt dafür sorgt, dass ein Computersystem ein Verfahren durchführt, zum Durchführen einer bidirektionalen Synchronisation zwischen Inhalt einer ersten Anordnung und Inhalt einer zweiten Anordnung durch Listen, die den genannten Inhalt identifizieren, wobei das genannte Verfahren die nachfolgenden Verfahrensschritte umfasst:
- das Detektieren einer Verbindung der ersten Anordnung mit der zweiten Anordnung,
- das Beantragen, durch die zweite Anordnung, wenigstens einer Liste, die von der ersten Anordnung zur Synchronisation markiert ist,
- in Reaktion auf den Antrag, das Übertragen der genannten wenigstens einen zur Synchronisation markierten Liste von der ersten Anordnung,
- das Vergleichen von Zeit- und Tagesinformation der genannten einen zur Synchronisation markierten Liste mit der Zeit- und Tagesinformation entsprechender Listen der genannten zweiten Anordnung, wobei dieser Vergleich Vergleichsinformation erzeugt;
- das Ermitteln, welche Listen von der ersten Anordnung in die zweite Anordnung kopiert werden sollen und welche Listen von der zweiten Anordnung in die erste Anordnung kopiert werden sollen, und zwar auf Basis der Vergleichsinformation; und
- das Kopieren der ermittelten Listen zum Vorformen der bidirektionalen Synchronisation, **dadurch gekennzeichnet, dass** der genannte Inhalt Mediainhalt ist, wobei die genannte erste Anordnung ein Mediaspieler (10) ist, wobei die genannte zweite Anordnung eine Gastgeberanordnung (20) ist und wobei die genannte Liste eine Playlist ist, wobei das genannte Verfahren weiterhin die nachfolgenden Verfahrensschritte umfasst:
- das Ermitteln, ob der Mediaspieler (10) wenigstens eine vorher bestehende Playlist gelöscht hat; und
- das Aktualisieren eines Speichers der Gastgeberanordnung (20) durch Speicherung des Mediainhalts der wenigstens einen gelöschten Playlist in einem Archivdatenverzeichnis der Gastgeberanordnung (20).

12. Von einer Maschine auslesbares Medium nach Anspruch 11, wobei der genannte Verfahrensschritt der Detektion einer Verbindung des Mediaspielers (10) mit der Gastgeberanordnung (20) weiterhin Folgendes umfasst: das Ermitteln, ob der Mediaspieler (10) zur Synchronisation mit der Gastgeberanordnung (20) verbunden ist.

13. Von einer Maschine auslesbares Medium nach Anspruch 11, wobei das genannte Verfahren weiterhin die nachfolgenden Verfahrensschritte umfasst:
- das Ermitteln, ob der Mediaspieler (10) wenigstens eine neue Playlist erzeugt hat;
- das Kopieren der wenigstens einen neuen Playlist aus dem Mediaspieler (10) in die Gastgeberanordnung (20), wenn der genannte Ermittlungsschritt befriedigt worden ist; und
- das Speichern der wenigstens einen neuen Playlist in einem Datenverzeichnis der Gastgeberanordnung (20).

14. Von einer Maschine auslesbares Medium nach Anspruch 11, das weiterhin das Erzeugen und Speichern von Playlists umfasst, die Multimediainhalt in der genannten Gastgeberanordnung (20) und dem Mediaspieler (10) identifizieren.

## Revendications

1. Procédé pour exécuter une synchronisation bidirectionnelle entre le contenu d'un premier dispositif et le contenu d'un second dispositif par le biais de listes identifiant ledit contenu, ledit procédé comprenant les étapes consistant à:
détecter le raccordement du premier dispositif au second dispositif;
demander, du second dispositif, au moins une liste du premier dispositif qui est marquée pour être synchronisée;
transférer, en réaction à la demande, à partir du premier dispositif au second dispositif ladite au moins une liste qui est marquée pour être synchronisée;
comparer l'information de temps et de date de ladite au moins une liste, qui est marquée pour être synchronisée, à l'information de temps et de date des listes correspondantes dudit second dispositif, ladite comparaison produisant de l'information de comparaison;
déterminer quelles listes doivent être copiées à partir du premier dispositif au second dispositif et quelles listes doivent être copiées à partir du second dispositif au premier dispositif sur la base de l'information de comparaison; et
copier les listes déterminées pour exécuter la synchronisation bidirectionnelle,
**caractérisé en ce que** ledit contenu est un contenu de média, ledit premier dispositif est un lecteur de média (10), ledit second dispositif est un dispositif hôte (20) et ladite liste est une liste de diffusion dans laquelle ledit procédé comprend encore les étapes consistant à:
déterminer si le lecteur de média (10) a effacé au moins une liste de diffusion préexistante; et
mettre à jour une mémoire de stockage du dispositif hôte (20) en stockant le contenu de média de l'au moins une liste de diffusion effacée dans un répertoire de données de fichier du dispositif hôte (20).

2. Procédé selon la revendication 1, comprenant encore la création et le stockage des listes de diffusion identifiant le contenu de multimédia dans chacun dudit dispositif hôte (20) et dudit lecteur de média (10).

3. Procédé selon la revendication 1, dans lequel le dispositif hôte (20) est un ordinateur personnel (20) et dans lequel les étapes de la revendication 1 sont effectuées à l'aide d'un programme d'application spécialisé qui est stocké dans l'ordinateur personnel (20).

4. Procédé selon la revendication 1, comprenant encore l'étape consistant à stocker les listes de diffusion qui sont copiées à partir du lecteur de média (10) au dispositif hôte (20) dans une mémoire de stockage (22) du dispositif hôte et à stocker les listes de diffusion qui sont copiées à partir du dispositif hôte (20) au lecteur de média (10) dans une mémoire de stockage (12) du lecteur de média (10).

5. Procédé selon la revendication 1, dans lequel ladite étape consistant à détecter le raccordement du lecteur de média (10) au dispositif hôte (20) comprend encore la détermination si le lecteur de média (10) est raccordé au dispositif hôte (20) en vue de la synchronisation.

6. Procédé selon la revendication 1, dans lequel ledit procédé comprend encore les étapes consistant à:
déterminer si le lecteur de média (10) a créé au moins une nouvelle liste de diffusion;
copier l'au moins une nouvelle liste de diffusion à partir du lecteur de média (10) au dispositif hôte (20) lorsqu'il est satisfait à ladite étape de détermination; et
stocker l'au moins une nouvelle liste de diffusion dans un répertoire de données du dispositif hôte (20).

7. Procédé selon la revendication 1, dans lequel le lecteur de média (10) comprend un lecteur audio et dans lequel les listes de diffusion du lecteur audio identifient le contenu de média comprenant au moins des fichiers audio de chansons; ou dans lequel le lecteur de média (10) comprend un lecteur vidéo et dans lequel les listes de diffusion du lecteur vidéo identifient le contenu de média comprenant au moins des fichiers vidéo de vidéos; ou dans lequel le lecteur de média (10) comprend une visionneuse d'images et dans lequel les listes de diffusion de la visionneuse d'images identifient le contenu de média comprenant au moins des fichiers d'image d'images.

8. Appareil pour exécuter la synchronisation bidirectionnelle entre le contenu d'un premier dispositif et le contenu d'un second dispositif par le biais de listes identifiant ledit contenu, ledit appareil comprenant ledit second appareil pour:
détecter le raccordement du premier dispositif au second dispositif;
demander, du second dispositif, au moins une liste du premier dispositif qui est marquée pour être synchronisée;
transférer, en réaction à la demande, à partir du premier dispositif au second dispositif ladite au moins une liste qui est marquée pour être synchronisée;
comparer l'information de temps et de date de ladite au moins une liste, qui est marquée pour être synchronisée, à l'information de temps et de date des listes correspondantes dudit second dispositif, ladite comparaison produisant de l'information de comparaison;
déterminer quelles listes doivent être copiées à partir du premier dispositif au second dispositif et quelles listes doivent être copiées à partir du second dispositif au premier dispositif sur la base de l'information de comparaison; et
copier les listes déterminées pour exécuter la synchronisation bidirectionnelle,
**caractérisé en ce que** ledit contenu est un contenu de média, ledit premier dispositif est un lecteur de média (10), ledit second dispositif est un dispositif hôte (20) et ladite liste est une liste de diffusion dans laquelle ledit dispositif hôte (20) est agencé de manière à:
déterminer si le lecteur de média (10) a effacé au moins une liste de diffusion préexistante; et
mettre à jour une mémoire de stockage du dispositif hôte (20) en stockant le contenu de média de l'au moins une liste de diffusion effacée dans un répertoire de données de fichier du dispositif hôte (20).

9. Appareil selon la revendication 8, dans lequel le dispositif hôte (20) est un ordinateur personnel (20).

10. Appareil selon la revendication 8, dans lequel le dispositif hôte (20) comprend une interface de dispositif hôte étant une porte IEEE 1394 ou une porte USB.

11. Support lisible par machine dont le contenu effectue qu'un système informatique réalise un procédé pour exécuter une synchronisation bidirectionnelle entre le contenu d'un premier dispositif et le contenu d'un second dispositif par le biais de listes identifiant ledit contenu, ledit procédé comprenant les étapes consistant à:
détecter le raccordement du premier dispositif au second dispositif;
demander, du second dispositif, au moins une liste du premier dispositif qui est marquée pour être synchronisée;
transférer, en réaction à la demande, à partir du premier dispositif au second dispositif ladite au moins une liste qui est marquée pour être synchronisée;
comparer l'information de temps et de date de ladite au moins une liste, qui est marquée pour être synchronisée, à l'information de temps et de date des listes correspondantes dudit second dispositif, ladite comparaison produisant de l'information de comparaison;
déterminer quelles listes doivent être copiées à partir du premier dispositif au second dispositif et quelles listes doivent être copiées à partir du second dispositif au premier dispositif sur la base de l'information de comparaison; et
copier les listes déterminées pour exécuter la synchronisation bidirectionnelle,
**caractérisé en ce que** ledit contenu est un contenu de média, ledit premier dispositif est un lecteur de média (10), ledit second dispositif est un dispositif hôte (20) et ladite liste est une liste de diffusion dans laquelle ledit procédé comprend encore les étapes consistant à:
déterminer si le lecteur de média (10) a effacé au moins une liste de diffusion préexistante; et
mettre à jour une mémoire de stockage du dispositif hôte (20) en stockant le contenu de média de l'au moins une liste de diffusion effacée dans un répertoire de données de fichier du dispositif hôte (20).

12. Support lisible par machine selon la revendication 11, dans lequel ladite étape consistant à détecter le raccordement du lecteur de média (10) au dispositif hôte (20) comprend encore la détermination si le lecteur de média (10) est raccordé au dispositif hôte (20) en vue de la synchronisation.

13. Support lisible par machine selon la revendication 11, dans lequel ledit procédé comprend encore les étapes consistant à:
déterminer si le lecteur de média (10) a créé au moins une nouvelle liste de diffusion;
copier l'au moins une nouvelle liste de diffusion à partir du lecteur de média (10) au dispositif hôte (20) lorsqu'on satisfait à ladite étape de détermination; et
stocker l'au moins une nouvelle liste de diffusion dans un répertoire de données du dispositif hôte (20).

14. Support lisible par machine selon la revendication 11, comprenant encore la création et le stockage des listes de diffusion identifiant le contenu de multimédia dans chacun dudit dispositif hôte et dudit lecteur de média (10).
